# DEMANDE DE BREVET EUROPEEN

(11) **EP 4 707 958 A1**
(43) Date de publication de la demande: **11.03.2026**
(21) Numéro de dépôt: 24198448.3
(22) Date de dépôt: 04.09.2024
(51) Int. Cl.: G04D 7/00, G01B 9/02091, G01N 21/958, G01N 25/68

(54) **PROCÉDÉ DE CARACTÉRISATION D'INTERFACES PHYSIQUES D'UN DISPOSITIF EMBOÎTÉ**

(71) Demandeur: Association Suisse pour la Recherche Horlogère, 2002 Neuchâtel (CH)
(72) Inventeur: Marquis Weible, Fabienne, 2000 Neuchâtel (CH); Vallat, Evelyne, 2054 Chézard-St-Martin (CH); Hess, Hanspeter, 3110 Münsingen (CH)
(74) Mandataire: P&TS SA (AG, Ltd.)

(57) **Abrégé**

La présente divulgation concerne un procédé de caractérisation d'interfaces physiques d'un dispositif emboîté (10) comprenant une cavité (11) contenant un volume d'air et un verre (12), la cavité comprenant des parois (16) comportant un fond (17) et un verre (12), pourvu une surface intérieure (15) en contact avec le volume d'air et une surface externe (14) opposée à la surface intérieure. Le procédé comprend :
appliquer un gradient thermique entre la surface externe du verre (12) et le fond de manière à obtenir entre la surface externe du verre et le fond une différence de température ΔTₛ suffisante pour générer de la buée (25) sur au moins une portion (13) de la surface intérieure (15) du verre (12);
fournir un appareil de tomographie par cohérence optique (OCT) (30) configuré pour mesurer un signal interférométrique ; et
une fois la différence de température ΔTₛ obtenue, mesurer le signal interférométrique pendant une période de mesure (tₘ) de manière à déterminer la présence de la buée sur ladite au moins une portion (13) de la surface intérieure (15) du verre (12).

## Description

### Domaine technique

La présente divulgation concerne un procédé de caractérisation d'interfaces physiques d'un dispositif emboîté. Plus particulièrement, la présente divulgation concerne un procédé de caractérisation de la buée sur la surface intérieure d'un verre d'un dispositif emboîté comprenant une cavité contenant un volume d'air.

### Etat de la technique

La détection de buée sous une fenêtre de lecture, en particulier la buée sous la glace devançant le cadran d'une montre, est généralement réalisée visuellement, soit à l'aide d'une caméra, soit par observation à l'oeil nu. La détection de la formation de buée par caméra dépend sensiblement des conditions d'éclairage et est très dépendante de l'arrière-plan (clair ou foncé, réflecteur ou mat). L'observation à l'oeil nu est plus sensible et moins dépendante de l'arrière-plan que la détection avec une caméra, mais elle ne permet pas un contrôle automatisé et est de ce fait très onéreuse dans un environnement de production industrielle.

La détection de buée peut en particulier être utilisée en lien avec le contrôle de l'étanchéité d'un dispositif emboîté. D'autres approches pour la détection de buée ou le contrôle de l'étanchéité ont été proposés. Par exemple, le document EP3121663 A1 décrit un procédé de contrôle de l'étanchéité d'une pièce d'horlogerie, comprenant les étapes de mesurer la marche de la pièce d'horlogerie soumise à une première pression extérieure pour obtenir une première valeur de marche de référence; mesurer la marche de la pièce d'horlogerie soumise à une seconde pression extérieure dans une enceinte de mise sous pression, pour obtenir une seconde valeur de marche sous pression; et comparer les valeurs de marche sous pression et de marche de référence pour en déduire ou non une faille de l'étanchéité en cas d'écart dépassant un seuil prédéfini.

### Résumé de la divulgation

La présente divulgation concerne un procédé de caractérisation d'interfaces physiques d'un dispositif emboîté comprenant une cavité contenant un volume d'air, la cavité comprenant des parois comportant un fond et un verre, le verre comportant une surface intérieure, en contact avec le volume d'air, et une surface externe, opposée à la surface intérieure. Le procédé comprend :
appliquer un gradient thermique entre la surface externe du verre et le fond pendant une période initiale de manière à obtenir entre la surface externe du verre et le fond une différence de température ΔTₛ suffisante pour générer de la buée sur au moins une portion d'une surface intérieure du verre;
fournir un appareil de tomographie par cohérence optique (OCT) configuré pour mesurer un signal interférométrique à l'aide d'un faisceau lumineux ; et
une fois l'obtention de la différence de température ΔTₛ, mesurer le signal interférométrique pendant une période de mesure de manière à déterminer la présence de la buée sur ladite au moins une portion de la surface intérieure du verre.

Le procédé décrit ici permet de détecter de la buée ou tout autre film qui réduit la lisibilité de l'affichage. Le procédé permet de palier aux inconvénients des deux méthodes standard actuelles.

Ces avantages, ainsi que d'autres, ressortiront de l'application des modes de réalisation décrits dans le présent document.

### Brève description des figures

Des exemples de mise en oeuvre de la divulgation sont indiqués dans la description illustrée par les figures annexées dans lesquelles :
la figure 1 montre un exemple du dispositif emboîté comportant une cavité et un verre, selon une forme d'exécution ;
la figure 2 montre un schéma de principe d'un appareil d'OCT;
la figure 3 montre le dispositif emboîté selon un arrangement particulier;
la figure 4 montre une vue de face de la surface externe du verre du dispositif emboîté, selon une forme d'exécution;
les figures 5 et 6 montrent la variation de la différence de température ΔTₛ (courbe A) et du signal interférométrique mesuré à la surface intérieure du verre (courbe B) en fonction du temps, sans ajout d'eau (figure 5) et avec l'ajout de 2 µl d'eau dans la cavité (figure 6);
la figure 7 montre la variation la température à la surface externe du verre (courbe A), dans la cavité (courbe B), et sur le fond (courbe C), ainsi que la variation de l'humidité (courbe D) en fonction du temps; et
la figure 8 présente l'évolution temporelle de plusieurs signaux OCT mesurés pour le dispositif emboîté;

### Description détaillée

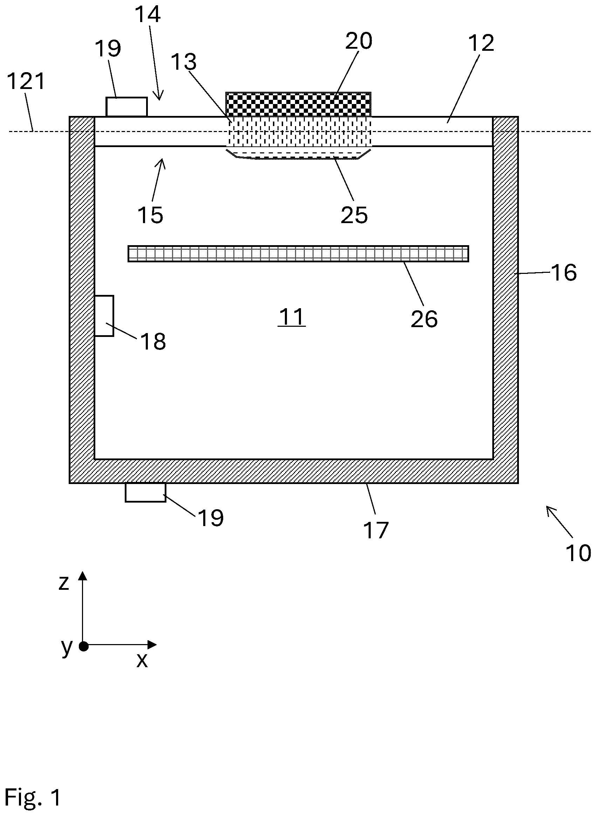

La **figure 1** montre un exemple du dispositif emboîté 10 qui comprend des parois 16 comportant un fond 17 et un verre 12, les parois 16 formant une cavité 11 contenant un volume d'air. Dans l'exemple de la figure 1, le verre 12 est arrangé du côté opposé au fond 17. Le verre 12 s'étend dans un plan de verre 121 (défini par les axes "x" et "y") et comprend une surface intérieure 15, en contact avec le volume d'air de la cavité 11, et une surface externe 14, opposée à la surface intérieure 15. Le verre 12 peut être transparent à la lumière visible et possiblement à l'infrarouge.

Selon un mode de réalisation, un procédé de caractérisation d'interfaces physiques du dispositif emboîté 10 contenant le volume d'air, comprend :
appliquer un gradient thermique entre la surface externe 14 du verre 12 et le fond 17 pendant une période initiale tᵢ de manière à obtenir entre la surface externe du verre et le fond une différence de température ΔTₛ suffisante pour générer de la buée 25 sur au moins une portion 13 de la surface intérieure du verre 15;
fournir un appareil d'OCT 30 configuré pour mesurer un signal interférométrique; et
une fois l'obtention de la différence de température ΔTₛ, mesurer le signal interférométrique pendant une période de mesure tₘ de manière à déterminer la présence de buée sur ladite au moins une portion 13 de la surface intérieure 15 du verre 12.

De manière préférée, le verre 12 est transparent aux longueurs d'ondes de 400 nm à 2500 nm. De manière préférée, la gamme de transparence du verre 12 inclut le spectre d'émission de la source lumineuse de l'appareil d'OCT 30. Par exemple, un verre en acrylique (plexiglas) est transparent aux longueurs d'onde jusqu'à 1200 nm et le saphir est transparent aux longueurs d'onde jusqu'à 2500 nm.

De manière générale, l'application du gradient thermique permet de générer de la buée de manière contrôlée sur la surface intérieure 15 du verre 12. La buée est formée par condensation au point de rosée. La formation de la buée est donc fonction de l'hygrométrie du volume d'air dans la cavité 11 et de la température atteinte à la surface intérieure 15 du verre 12.

De manière préférée, l'application du gradient thermique entre la surface externe 14 du verre 12 et le fond 17 peut être réalisée de sorte que la buée 25 ainsi générée n'occupe qu'une portion 13 de la surface intérieure du verre 12, comme illustré à la figure 1. Selon un exemple, le gradient thermique peut être appliqué de sorte que la buée est formée sur toute la surface intérieure 15 du verre 12 ou forme un film de buée plus ou moins discontinu sur la surface intérieure 15.

La création d'un film (de buée, continu ou discontinu) sur l'une ou l'autre des surfaces 14, 15 du verre 12 modifie le saut d'indice optique (dioptre) à cette interface et peut être détectée sous la forme d'une infime variation de la réflectivité qui est aisément mesurée par l'appareil d'OCT 30.

La période initiale tᵢ peut correspondre au temps nécessaire à l'obtention de la différence de température ΔTₛ à l'équilibre quasi-stationnaire sur le verre 12. Le gradient thermique permet d'obtenir la condensation au point de rosée.

Selon une forme d'exécution, l'application du gradient thermique peut comprendre d'appliquer un point froid sur le verre 12.

Selon une forme d'exécution, l'application du gradient thermique comprend l'application d'un point froid sur la surface externe 14 du verre 12 pendant que le reste du dispositif emboîté 10 est chauffé. Par exemple, les parois 16 du dispositif emboîté 10 peuvent être chauffées, ou seulement l'une des parois, tel que le fond 17.

L'application du point froid peut être réalisée à l'aide d'un dispositif de refroidissement 20 arrangé sur la surface externe 14 du verre 12. Le dispositif de refroidissement 20 peut comprendre un élément Peltier. Dans l'exemple de la figure 1, l'élément Peltier 20 prend la forme d'un disque arrangé sur la surface externe 14 du verre 12. Le dispositif emboîté 10 peut comprendre un capteur 18 configuré pour mesurer l'humidité relative et la température au sein de la cavité 11. Ces deux variables indépendantes permettent de calculer l'humidité absolue de l'air dans la cavité. La température de la surface externe 14 du verre 12 et la température externe du fond 17 peuvent être mesurées à l'aide des capteurs 19. Le gradient thermique mesuré correspond à la différence de température ΔTₛ mesurée avec les capteurs 19 entre le fond 17 et la surface externe 14 du verre 12.

Par exemple, l'application du point froid entre -10°C et 15°C peut être suffisant pour générer de la buée 25 dans le volume d'air piégé dans la cavité 11. La température de la surface externe 14 du verre 12 peut être mesurée avec un capteur de température 19, par exemple un capteur de température à résistance tel qu'un capteur de type Pt100. On ne connaît pas précisément la température de la surface intérieure 15 du verre 12 qui dépend de l'épaisseur du verre 12 et de la conductivité thermique de son environnement (par exemple, le type de contact thermique entre le verre 12 et les parois 16, l'émissivité du verre 12 et la conductivité thermique intrinsèque au matériau du verre 12).

Selon un aspect, le dispositif emboîté 10 est chauffé jusqu'à ce que la température de la surface externe 14 du verre 12 atteigne une valeur prédéterminée, par exemple de 45°C ou 55°C. Notons qu'une différence de température ΔTₛ de 25°C à 30°C entre la surface externe 14 du verre 12 et le fond 17 peut être établie en 30 à 100 secondes avec le point froid tel qu'un élément Peltier.

Selon une autre forme d'exécution conforme à la norme internationale ISO 22810, l'application du gradient thermique comprend le chauffage du dispositif emboîté 10 pour atteindre une température de la surface externe 14 du verre 12 entre 40°C et 45°C et l'application locale d'une goutte d'eau froide (température de l'eau entre 18°C et 25°C, application du point froid). La période initiale tᵢ permettant l'obtention d'une valeur prédéterminée de différence de température ΔTₛ est de 60 s. On notera que la différence de température ΔTₛ obtenue avec une goutte d'eau à 4°C est d'environ -5°C, ce qui n'est pas suffisant pour générer de la buée dans de l'air ambiant (20°C, ≤ 50% d'humidité relative) piégé dans la cavité 11. Cela est cependant suffisant pour produire de la buée si l'air piégé est saturé d'humidité (20°C, humidité relative ≥ 70%).

Notons que tout autre moyen de refroidissement qu'un élément Peltier ou une goutte d'eau peut être utilisé.

On notera que l'appareil d'OCT peut comprendre un appareil d'OCT temporelle également connu sous l'acronyme anglo-saxonne TD-OCT (pour « *time-domain OCT* »)*.* L'appareil d'OCT peut également comprendre un appareil d'OCT fréquentielle ou OCT dans le domaine de Fourier, également connu sous l'acronyme anglo-saxonne FD-OCT (pour « *Fourier-domain OCT*»)*.* Le type d'appareil FD-OCT comprend lui-même les deux catégories connues sous les acronymes anglais SS-OCT (pour « *swept source OCT* » et SD-OCT (pour « *spectral domain OCT* »)

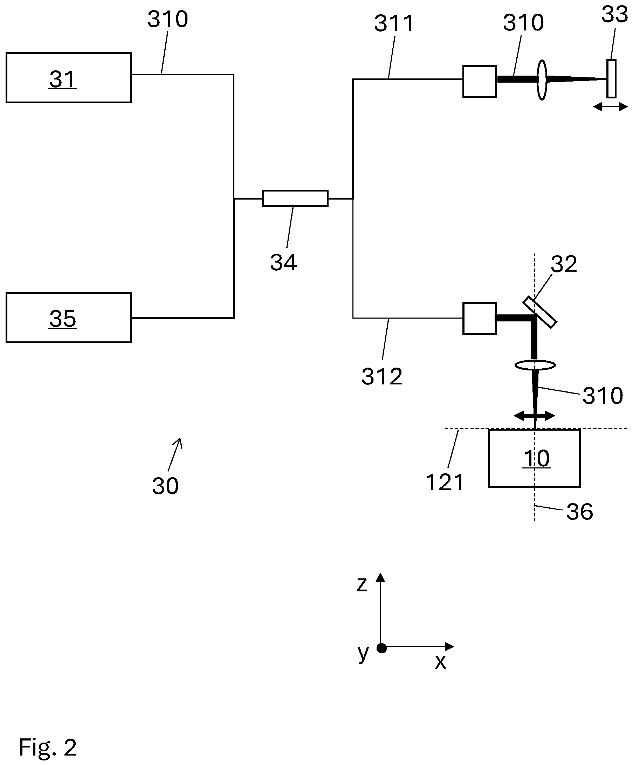

La **figure 2** montre un schéma de principe d'un appareil d'OCT 30 (ici un appareil SS-OCT). On notera que la description ci-dessous s'applique également à un appareil SD-OCT. L'appareil d'OCT comprend une source lumineuse 31 émettant un faisceau lumineux 310 soit à large spectre et basse cohérence temporelle ou de haute cohérence temporelle mais à longueur d'onde variable dans le temps, et un interféromètre comprenant un miroir de mesure 32, un miroir de référence 33, et une lame séparatrice 34 (lame semi-réfléchissante). Le faisceau lumineux 310 peut comprendre une ou plusieurs sources, par exemple plusieurs sources laser. Le miroir de référence 33 est configuré de manière à pouvoir être translaté (le mouvement de translation est indiqué par la flèche dans la figure 2). Le miroir de mesure 32 est configuré pour être déplacé. Le faisceau lumineux 310 est divisé (puis recombiné) en un bras de référence 311 dirigé vers le miroir de référence 33, et un bras de mesure 312 dirigé vers le miroir de mesure 32 et l'échantillon. Ici, l'échantillon est le dispositif emboîté 10. La différence de longueur du chemin optique entre le bras de référence 311 et le bras de mesure 312 donne un motif d'interférence qui est ensuite analysé par un spectromètre ou un détecteur à haute résolution temporelle 35, qui génère le signal interférométrique correspondant au motif d'interférence.

Comme discuté ci-dessus, le verre 12 est préférablement transparent à la lumière visible et à l'infrarouge, incluant le faisceau lumineux 310 de l'appareil d'OCT.

Selon un aspect, l'appareil d'OCT 30 comprend une source lumineuse 31. Par exemple, la source lumineuse 31 peut être choisie pour émettre à une longueur d'onde 840 nm avec une largeur de bande de 40 nm. Dans un second mode de réalisation, la source lumineuse de l'appareil d'OCT peut avoir un spectre d'émission avec une longueur d'onde entre 800 nm et 1200 mm. Le choix spectre d'émission dépendra de la transparence du verre 12. Dans le second mode de réalisation, l'appareil d'OCT 30 peut être caractérisé par une profondeur de détection de 4 mm.

Le motif d'interférence dont est extrait par traitement numérique le signal interférométrique, est sensible au coefficient de réflexion à l'interface entre la surface intérieure 15 du verre 12 et la buée 25, lui-même dépendant de l'indice de réfraction du verre 12 et l'indice optique apparent de la buée 25.

En translatant le miroir de référence 33, l'appareil d'OCT 30 permet de cartographier ponctuellement en profondeur (sur quelques dixièmes à quelques millimètres) des empilements d'interfaces optiques. Grâce au balayage latéral de la surface de l'échantillon par le faisceau lumineux 310 contrôlé par le mouvement du miroir de mesure 32, l'empilement en profondeur des interfaces sur des surfaces millimétriques à centimétriques peuvent être caractérisées. Plus particulièrement, l'appareil d'OCT 30 permet d'établir la répartition spatiale des empilements de couches avec une résolution en profondeur d'environ 5 µm. On parle de A-scan pour la mesure ponctuelle du profil en profondeur (selon z, voir la figure 2) et de B-scan pour un balayage latéral des profils. La reconstruction tridimensionnelle (tomographie) des couches est appelée C-scan.

L'appareil d'OCT 30 peut être appliqué au suivi en temps réel de la formation de buée, et/ou de la détection de la présence de buée sur la surface intérieure 15 du verre 12.

Une fois l'obtention de la différence de température ΔTₛ par application du gradient thermique, la mesure du signal interférométrique avec l'appareil d'OCT 30 est initiée et se poursuit pendant la période de mesure tₘ. Le point froid peut être enlevé à l'obtention de ΔTₛ, avant l'initiation de la mesure du signal interférométrique.

Selon une forme d'exécution, la période de mesure tₘ correspond au temps nécessaire au retour à l'équilibre thermique quasi-stationnaire, c'est-à-dire lorsque l'effet du refroidissement local du verre 12 s'est atténué. Il y a alors dissipation de la buée 25.

D'autres formes d'exécution comprenant des combinaisons variables de séquences de refroidissement local et de relaxation (retour partiel à l'équilibre thermique) peuvent être envisagées pour les besoins d'un contrôle à une cadence intéressante à l'échelle industrielle.

Selon une forme d'exécution, un signal interférométrique de référence est mesuré avec l'appareil d'OCT 30 en absence de buée sur le verre 12.

Selon une forme d'exécution, le faisceau lumineux 310 est balayé latéralement, suivant une ligne dans un sens parallèle au plan de verre 121 (B-scan, dans le plan formé par les axes "x" et "y" dans la figure 2). Par exemple, un balayage peut être réalisé sur une ligne d'environ 5 mm de longueur. Le traitement du signal interférométrique comprend l'acquisition d'une pluralité de signaux A-scan le long de la ligne balayée. Pour chaque interface rencontrée en profondeur, le signal interférométrique est moyenné sur la ligne de balayage latéral. Cette valeur moyenne est alors utilisée comme indicateur de la présence de buée sur la surface intérieure 15 du verre 12 le long de la ligne choisie.

Des images 3D ou volumétriques peuvent être formées en mesurant plusieurs A-scans par B-scan et plusieurs B-scans par volume 3D. Les informations d'intensité recueillies dans les directions axiale et latérale permettent de former des images 3D.

L'appareil d'OCT 30 permet de mesurer le signal interférométrique sur une zone de mesure étendue sur la surface du verre 12 et d'obtenir une détection fiable de la présence ou non de buée. La très grande sensibilité du signal interférométrique permet de détecter d'infimes variations du coefficient de réflexion aux interfaces optiques d'un empilement spatial de dioptres (couches adjacentes qui se différencient par leur indice de réfraction). Il est donc possible de cartographier en profondeur les empilements d'interfaces optiques, ceci sur des surfaces millimétriques à centimétriques, grâce au balayage contrôlé de la surface du verre 12 par le faisceau lumineux 310.

La vitesse d'acquisition du signal interférométrique et de son traitement peut être très rapide (de l'ordre de la seconde pour l'acquisition et le traitement du signal en profondeur sur une ligne de balayage latéral de quelques millimètres de longueur).

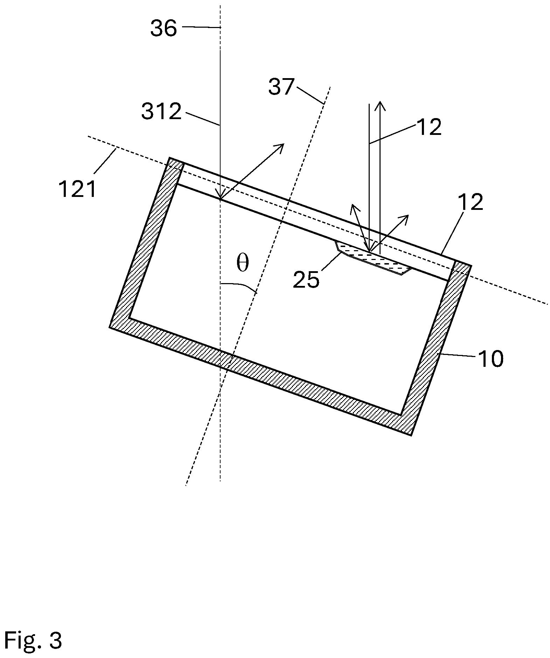

Selon un mode de réalisation montré à la **figure 3****,** le dispositif emboîté 10 est arrangé de sorte que le verre 12 (le plan de verre 121) soit incliné par rapport à l'axe de propagation 36 du faisceau lumineux dans le bras de mesure 312. Cet arrangement permet de maximiser la sensibilité du signal interférométrique à la présence de buée. Par exemple, l'angle d'inclinaison θ peut être défini comme l'angle entre un axe normal 37 à la surface externe 14 du verre 12 au point d'incidence du faisceau et son axe de propagation 36. L'angle d'inclinaison θ optimal est celui qui permet de mesurer le signal OCT à la limite de détection de l'appareil d'OCT. Dans cette situation, toute modification même minime de la réflectivité à l'interface 15 sous le verre modifiera sensiblement le signal interférométrique. Par exemple, l'angle d'inclinaison θ optimal peut être choisi entre 2° et 10°, préférablement autour de 5.5°.

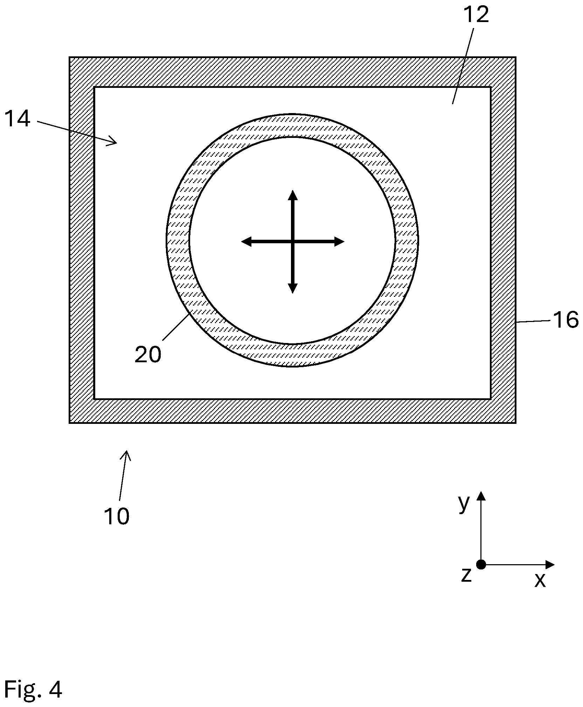

La **figure 4** montre une vue de face du dispositif emboîté 10 présentant la surface externe 14 du verre 12, selon une forme d'exécution dans laquelle le dispositif de refroidissement 20 comprend un élément Peltier annulaire arrangé sur la surface externe 14 du verre 12. Le faisceau lumineux se propageant dans le bras de mesure 312 peut être balayé dans le plan de verre 121 (selon les axes "x" et "y") à l'intérieur de l'anneau formé par l'élément Peltier 20.

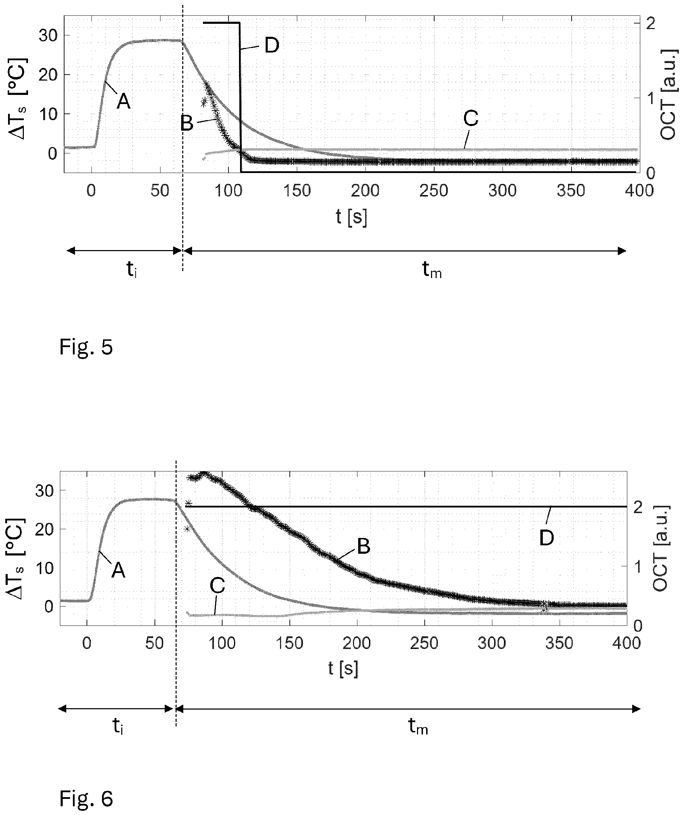

Les **figures 5** et **6** montrent la variation de la différence de température ΔTₛ (courbe A) et du signal interférométrique mesuré à la surface intérieure 15 du verre 12 (courbe B) en fonction du temps. Un gradient thermique est appliqué pendant une période initiale tᵢ de 60 s, de sorte à obtenir une différence de température ΔTₛ d'environ 30°C. Après l'application du gradient thermique (indiqué par la ligne en traitillé), la différence de température ΔTₛ diminue de façon monotone jusqu'à zéro, c'est-à-dire jusqu'à la disparition du gradient thermique entre la surface externe 14 du verre 12 et le fond 17 (retour aux conditions d'équilibre thermique quasi-stationnaires initiales). Après l'application du gradient thermique, la mesure du signal interférométrique avec l'appareil d'OCT 30 est initiée et se poursuit pendant la période de mesure tₘ. Dans cet exemple, la période de mesure tₘ s'étend entre la fin de l'application du gradient et jusqu'à la disparition de la différence de température ΔTₛ.

Dans le cas où le dispositif emboîté 10 comprend une interface 26, étant au moins partiellement non transparents aux longueurs d'ondes de la source lumineuse de l'appareil d'OCT et arrangée entre le verre 12 et le fond 17 (voir la Fig. 1), l'appareil d'OCT 30 mesurera également un signal interférométrique correspondant à la présence de l'interface 26. Par exemple, l'interface 26 peut correspondre à un cadran dans le cas où le dispositif emboîté 10 est un boitier de montre.

Dans les figures 5 et 6, la courbe C représente le signal interférométrique mesuré à la surface de l'interface 26. La courbe C est utile comme signal de référence de l'appareil d'OCT et peut servir de signal de contrôle permettant de s'assurer que l'appareil d'OCT et le dispositif emboîté 10 sont bien alignés. Ce signal peut également permettre de détecter la présence de condensation sur la surface de l'élément 26 (le cadran dans le cas d'une montre). La courbe D correspond à l'observation visuelle de la présence ou de l'absence de buée. La valeur haute de la courbe D indique la présence de buée, alors que sa valeur basse indique l'absence de buée visible à l'oeil nu.

La figure 5 présente les mesures obtenues sur la cavité 11 sans ajout d'eau, alors que la figure 6 présente les résultats sur la même cavité 11 après injection de 2ul d'eau. Dans les deux cas, le volume d'air est de 2 cm³. Le verre 12 a une épaisseur de 1.5 mm. Dans le cas de la figure 5, on observe à l'oeil nu une disparition rapide de la buée, environ 50 secondes après la fin de l'application du gradient thermique. Le signal interférométrique perdure quelques secondes supplémentaires avant d'atteindre une valeur quasi-stationnaire. Dans le cas de la figure 6, on observe à l'oeil nu une présence de la buée pendant toute la période de mesure tₘ et le signal interférométrique reste élevé pendant une grande partie de la période de mesure tₘ.

Dans le cas où le dispositif emboîté 10 comprend un capteur 18 d'humidité relative et de la température au sein de la cavité 11, il est possible d'enregistrer indépendamment les conditions d'humidité et la température régnant dans le volume d'air dans la cavité 11. La connaissance de ces deux variables permet de calculer la valeur de l'humidité absolue dans la cavité. Le dispositif emboîté 10 peut également comprendre un capteur de température 19 (voir la figure 1), par exemple un capteur de température à résistance tel qu'un capteur de type Pt100 arrangé à la surface externe 14 du verre 12 et sur le fond 17 du dispositif emboîté 10, de manière à enregistrer la température à ces deux endroits.

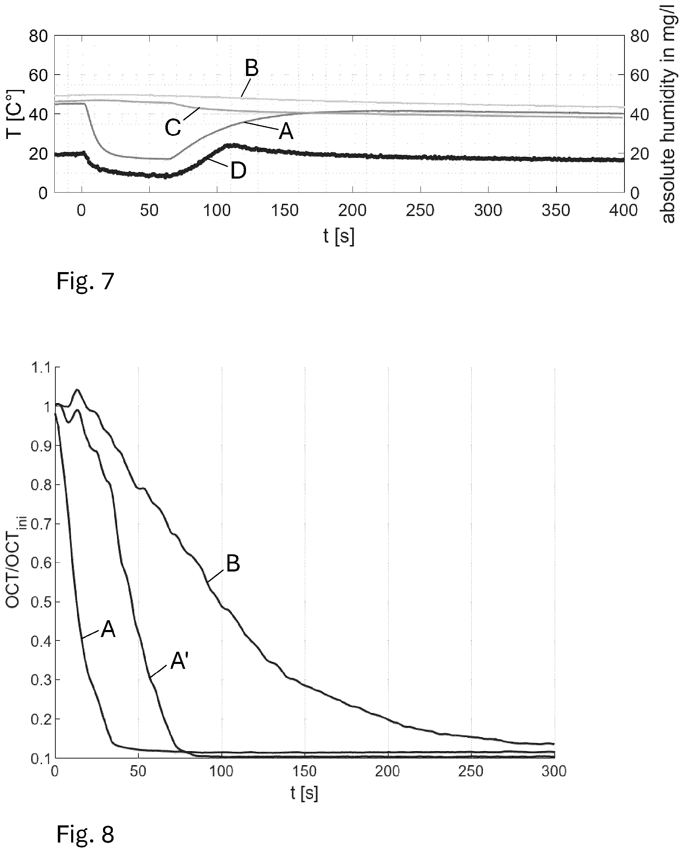

La **figure 7** montre la variation la température à la surface externe 14 du verre 12 (courbe A), dans la cavité 11 (courbe B), et sur le fond 17 (courbe C), en fonction du temps. La figure 7 montre également la variation temporelle de l'humidité absolue du volume d'air dans la cavité 11 (courbe D). La température du volume d'air reste relativement stable en comparaison avec la température à la surface externe 14 du verre 12. L'humidité absolue du volume d'air diminue au cours du refroidissement du verre 12. Après l'application du gradient thermique, au cours du retour à l'équilibre (pendant la période de mesure tₘ), l'humidité absolue augmente graduellement.

Les variations de l'humidité absolue du volume d'air dans la cavité 11 présentées à la figure 7 peuvent être interprétées comme un échange de masse d'eau sous forme liquide (formation de buée) ou gazeuse (humidité absolue) dans le volume d'air. Au cours de l'application du doigt froid, la buée se forme sur la surface intérieure 15 du verre 12 en déplétant le volume d'air de sa vapeur d'eau. Au cours du retour à l'équilibre, la buée se dissipe et enrichit progressivement le volume d'air en humidité.

La **figure 8** présente l'évolution temporelle de plusieurs signaux OCT mesurés pour le dispositif emboîté 10, normalisés relativement à leur valeur initiale, c'est-à-dire au temps tᵢ plus quelques secondes. Les courbes identifiées pas le symbole A et A' correspondent au volume d'air sans ajout d'eau. La courbe identifiée pas le symbole B correspond au volume d'air avec l'ajout de 2 µl d'eau. Les signaux OCT ont été mesurés pour le dispositif emboîté 10 dont le verre a une épaisseur de 1.5 mm (A) et 3.8 mm (A') et dont le volume d'air est de 2 cm³.

Les courbes A, A', B comportent une portion initiale I relativement plate, une portion comportant une pente P correspondant à une diminution plus ou moins rapide du signal interférométrique (et de la buée), et une portion finale asymptotique S correspondant au retour à l'équilibre thermique quasi-stationnaire. Ce type de « courbes en S » décroissantes sont décrites mathématiquement par différentes fonctions telles que des exponentielles étirées ou des portions de lois de puissance. Phénoménologiquement, les courbes A et A' se différencient de la courbe B par la durée de résidence de la buée : courte dans les cas A et A' et très longue dans le cas B.

En quantifiant à l'aide d'indicateurs appropriés la dynamique de déclin des « courbes en S » (paramètres d'ajustement d'une fonction sur toute la durée de la mesure ou mesure de la pente P de la portion de déclin marqué), il est possible de distinguer un état dit « sans défaut d'étanchéité » selon la norme internationale ISO 22810 (courbes A et A') d'un état du dispositif emboîté 10 « avec défaut d'étanchéité », représenté par les signaux OCT avec l'ajout de 2 µl d'eau dans le volume d'air (courbes B).

Dans la figure 8, les courbes identifiées pas le symbole A' montrent que lorsque le verre 12 est épais (3.8 mm) la pente P du signal interférométrique est décalée vers des temps plus longs que lorsque le verre 12 est mince (1.5 mm)

Selon une forme d'exécution, le procédé comprend en outre de calculer la pente P de la diminution du signal interférométrique afin d'indiquer un niveau d'humidité dans le volume d'air de la cavité 11. En particulier, la pente calculée peut être utilisée pour indiquer un niveau d'humidité inadmissible dans le volume d'air de la cavité 11, c'est-à-dire un niveau d'humidité pouvant créer de la buée inadmissible sur la surface intérieure 15 du verre 12.

Selon un mode de réalisation, le dispositif emboîté 10 comprend une pièce d'horlogerie, notamment une montre, le verre 12 étant la glace de la montre. Le dispositif emboîté 10 peut également comprendre un instrument de mesure avec un affichage sur un écran situé à une certaine distance du verre comme un manomètre ou tout autre instrument de mesure avec ce type d'indicateur. Ici, l'écran pourra correspondre à l'interface opaque 26 décrite ci-dessus.

Dans le cas où le verre 12 présente une courbure (concave ou convexe), les signaux OCT mesurés pendant la période de mesure tₘ peuvent être moyennés à l'aide d'un algorithme d'extrapolation de la position moyenne de l'interface optique (interface verre / air). Dans le cas d'un verre 12 ayant une courbure, le plan de verre peut correspondre à un plan moyen par rapport à la courbure ou encore à la surface courbe du verre 12.

Le procédé de détermination de condensation décrit ici permet de détecter la présence de buée et de monitorer en temps réel la formation ou la disparition de la buée sur le verre 12, en particulier sur la face intérieure 15 du verre 12. La sensibilité de détection du signal interférométrique est meilleure que celle de l'oeil humain et est indépendante de l'arrière-plan (de la présence de structures dans la cavité 11). L'appareil d'OCT 30 permet également de différencier la formation de buée sur la surface extérieure 15 ou intérieure 14 du verre 12. Par exemple, l'appareil d'OCT 30 permet de détecter une modification de l'interface entre le verre 12 et la cavité 11 qui pourrait dégrader la lisibilité d'un indicateur se trouvant dans la cavité 11, derrière le verre 12.

Le procédé peut être utilisé pour réaliser un test d'étanchéité de l'affichage d'un instrument de mesure, par exemple un test d'étanchéité d'une montre.

On notera que l'appareil d'OCT 30 et le procédé de caractérisation d'interfaces physiques du verre 12 décrit ici permettent non seulement de détecter la présence de structures (par exemple la buée) sur la surface intérieure 15 du verre 12, mais également de détecter la présence de structures derrière le verre 12 (dans la cavité 11). Par exemple, dans le cas où le dispositif emboîté 10 comprend un instrument de mesure avec un affichage sur un écran situé à une certaine distance du verre, il est alors possible de détecter les différentes structures de l'affichage, tels qu'un cadran, indexes, guichet, aiguilles, etc. L'appareil d'OCT 30 et le procédé de caractérisation peuvent alors être utilisés à des fin de caractériser les structures de l'instrument derrière le verre 12, par exemple à des fins de contrôle de qualité ou d'identification de produit.

### Numéros de référence employés sur les figures

- 10: dispositif emboîté
- 11: air emboîté
- 12: verre
- 121: plan de verre
- 13: portion du verre
- 14: surface externe du verre
- 15: surface intérieure du verre
- 16: paroi
- 17: fond
- 18: capteur d'humidité et de température
- 19: capteur de température
- 20: dispositif de refroidissement
- 25: buée
- 26: interface
- 30: appareil d'OCT
- 31: source lumineuse
- 310: faisceau lumineux
- 311: bras de référence
- 312: bras d'échantillon
- 32: miroir de référence
- 33: miroir d'échantillon
- 34: séparatrice
- 35: spectromètre
- 36: axe de propagation
- 37: axe normal au plan de verre
- θ: angle d'inclinaison
- tᵢ: période initiale
- tₘ: période de mesure

## Revendications

1. Procédé de caractérisation d'interfaces physiques d'un dispositif emboîté (10) comprenant une cavité (11) contenant un volume d'air, la cavité comprenant des parois (16) comportant un fond (17) et un verre (12), le verre comportant une surface intérieure (15), en contact avec le volume d'air, et une surface externe (14), opposée à la surface intérieure (15); le procédé comprenant :
appliquer un gradient thermique entre la surface externe (14) du verre (12) et le fond (17) pendant une période initiale (tᵢ) de manière à obtenir entre la surface externe du verre et le fond une différence de température ΔTₛ suffisante pour générer de la buée (25) sur au moins une portion (13) de la surface intérieure (15) du verre (12);
fournir un appareil de tomographie par cohérence optique (OCT) (30) configuré pour générer un faisceau lumineux (310) et mesurer un signal interférométrique;
une fois la différence de température ΔTₛ obtenue, mesurer le signal interférométrique pendant une période de mesure (tₘ) de manière à déterminer la présence de la buée sur ladite au moins une portion (13) de la surface intérieure (15) du verre (12).

2. Le procédé selon la revendication 1,
dans lequel le verre (12) est transparent à la lumière visible et à l'infrarouge, incluant le spectre d'émission du faisceau lumineux (310) de l'appareil d'OCT (30).

3. Le procédé selon la revendication 1 ou 2,
dans lequel la période initiale (tᵢ) correspond au temps nécessaire à l'obtention d'une différence de température ΔTₛ quasi-stationnaire sur le verre (12) permettant d'obtenir de la condensation au point de rosée.

4. Le procédé selon l'une des revendications de 1 à 3,
dans lequel l'application du gradient thermique comprend l'application d'un point froid sur la surface externe (14) du verre (12).

5. Le procédé selon la revendication 4,
dans lequel l'application du gradient thermique comprend l'application du point froid sur la surface externe (14) du verre (12) pendant que le reste du dispositif emboîté (10) est chauffé.

6. Le procédé selon la revendication 4 ou 5,
dans lequel l'application du point froid est réalisée à l'aide d'un dispositif de refroidissement (20) arrangé sur une surface externe (14) du verre (12).

7. Le procédé selon la revendication 6,
dans lequel le dispositif de refroidissement (20) comprend un élément Peltier.

8. Le procédé selon la revendication 4 ou 5,
dans lequel l'application du point froid est par l'application locale d'une goutte d'eau sur une surface externe (14) du verre (12).

9. Le procédé selon l'une des revendications de 1 à 8,
la période de mesure (tₘ) correspond au temps nécessaire au retour à l'équilibre thermique du verre (12).

10. Le procédé selon l'une des revendications de 1 à 9,
dans lequel mesurer le signal interférométrique comprend balayer le verre (12) avec le faisceau lumineux (310) de sorte à mesurer une pluralité de lignes balayées dans le plan de verre (121); et
moyenner la pluralité de lignes balayées afin d'obtenir un signal interférométrique moyenné.

11. Le procédé selon l'une des revendications de 1 à 10,
dans lequel le dispositif emboîté (10) est arrangé de sorte que le plan de verre (121) est incliné par rapport à un axe de propagation (36) du faisceau lumineux (310).

12. Le procédé selon la revendication 11,
dans lequel l'angle d'inclinaison θ optimal est entre 2° et 10°, préférablement de 5.5°.

13. Le procédé selon l'une des revendications de 1 à 12,
comprenant en outre de caractériser à l'aide d'indicateurs extraits de la diminution du signal interférométrique pendant la période de mesure (tₘ) afin d'indiquer un état d'humidité dans le volume d'air de la cavité (11).

14. Le procédé selon l'une des revendications de 1 à 12,
dans lequel le dispositif emboîté (10) comprend un instrument de mesure avec un affichage, notamment une montre.
